Europäisches Patentamt

European Patent Office

Office européen des brevets

(19)

(11) Veröffentlichungsnummer: **0 157 403**
**B1**

(12) **EUROPÄISCHE PATENTSCHRIFT**

(45) Veröffentlichungstag der Patentschrift:
**17.01.90**

(21) Anmeldenummer: **85103910.7**

(22) Anmeldetag: **01.04.85**

(51) Int. Cl.⁴: **F 26 B  13/10, F 26 B  7/00,
F 26 B  3/28, F 26 B  13/02**

(54) Verfahren und Anlage zum Trocknen einer mit härtbarem Kunstharz imprägnierten Warenbahn.

(30) Priorität: **02.04.84 JP 48635/84
02.04.84 JP 48636/84**

(43) Veröffentlichungstag der Anmeldung:
**09.10.85 Patentblatt 85/41**

(45) Bekanntmachung des Hinweises auf die Patenterteilung:
**17.01.90 Patentblatt 90/03**

(84) Bennante Vertragsstaaten:
**AT BE CH DE FR GB IT LI LU NL SE**

(56) Entgegenhaltungen:
**EP-B-0 035 682
DE-A-1 814 461
DE-A-2 735 075
DE-B-2 011 160
DE-B-2 655 972
FR-A-2 184 194
GB-A-1 234 956
US-A-3 262 494**

(73) Patentinhaber: **SINTER LIMITED
7 New Street
St. Peter Port Guernsey Channel Islands (GB)**

(74) Vertreter: **Patentanwälte  Schaad, Balass & Partner
Dufourstrasse 101 Postfach
CH-8034 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die Erfindung bezieht sich auf ein Verfahren sowie eine Vorrichtung zur Herstellung von Prepregs gemäss dem Oberbegriff von Anspruch 1 bzw. Anspruch 9.

Bei einem Prepreg handelt es sich um ein mit einem härtbaren Harz versehenes Flächengebilde, auf dem das in Form einer Lösung aufgebrachte Harz bis zu einem bestimmten Grad durch eine chemische Reaktion ausgehärtet ist. Die verwendungstechnischen Eigenschaften eines Prepregs werden durch den Härtungszustand bestimmt, so dass die Härtungsreaktion sehr sorgfältig und genau zum gewünschten Härtungsgrad geführt werden muss.

Bei einem bekannten Verfahren und einer bekannten Anlage der vorgenannten Art (EP-B-0 035 682) wird Warmluft in großer Menge und mit hoher Geschwindigkeit in die Behandlungskammer und auf die Warenbahn geblasen, um wirksam das Lösungsmittel aus dem Kunstharz auszutreiben. Dabei wird der Lufthaushalt in der Behandlungskammer so gesteuert, daß die Konzentration des ausgetriebenen Lösungsmittels auf einem Niveau gehalten wird, bei dem keine Explosionsgefahr besteht. Diese Anlage ist zwar relativ leistungsstark, ist jedoch wegen der großen Luftmenge und der hohen Aufblasgeschwindigkeiten und der dabei auftretenden Turbulenzen problematisch sowohl hinsichtlich der Produktqualität als auch hinsichtlich der Abluft, die in relativ großer Menge anfällt und natürlich gereinigt werden muß.

Aus der GB-A-1 234 956 und der FR-A-2 184 194 sind Vorrichtungen bekannt, in denen die Trocknung bzw. Trocknung und Aushärtung von einem auf einer Warenbahn befindlichen Harz durch Kombination von Strahlungswärme und im Gegenstrom zur Warenbahn geführten Luft erzielt wird. Dabei wird die in turbulenter Strömung geführte Luft als mit der Wärme zusammenwirkendes, aktives Trocknungs- bzw. Aushärtungsmittel benützt.

Die Aufgabe der Erfindung besteht darin, ein Verfahren und eine Anlage der eingangs genannten Art zu schaffen, durch die in möglichst kurzer Zeit möglichst grosse Mengen des Lösungsmittels verdampfen und gleichzeitig die chemische Härtungsreaktion in der ganzen Breite des Bahnmaterials beherrscht abläuft.

Entsprechend der Erfindung wird diese Aufgabe verfahrensmässig dadurch gelöst, dass die Luft in möglichst laminarer Strömung im wesentlichen parallel zur Warenbahn an dieser entlang geführt wird. Dabei dient sie als Transportmittel für die durch die Einwirkung der Strahlungswärme freigesetzten gasförmigen Stoffe.

Durch diese Massnahmen wird neben einer grossen Durchsatzleistung eine gute und beherrschte Produktenqualität erzielt. Gleichzeitig wird die Menge der zu reinigenden Abluft niedrig gehalten.

Ausserdem haben die erfindungsgemässen Massnahmen zur Folge, daß keine Harzpartikel von der Oberfläche der Warenbahn abgeblasen werden, die sich ansonsten an den Wänden der Behandlungskammer absetzen könnten. Wäre dies der Fall, so würden mit der Zeit diese Harzpartikel aushärten und karbonisieren. Diese karbonisierten Harzpartikel könnten sich in diesem Zustand von den Wänden der Behandlungskammer lösen und sich auf der Warenbahn absetzen und sogen. schwarze Flecken am Endprodukt erzeugen. Diese sogen. schwarzen Flecken werden bei der erfindungsgemäßen Lösung wirksam vermieden. Es ist somit auch nicht erforderlich, die erfindungsgemäß Anlage von Zeit zu Zeit in ihrem Betrieb zu unterbrechen und die abgesetzten Harzpartikel abzureinigen.

Da die Frischluft mit relativ geringer Geschwindigkeit und in laminarer Strömung eingeblasen wird, tritt kein Flattern der Warenbahn auf, was unter bestimmten Umständen zu einer schlechten Produktqualität führen könnte. Die besonderen Strömungsverhältnisse der Frischluft induzieren auch keine unregelmäßigen Spannungen in die Warenbahn, welche zu einem Verwerfen oder Beschädigen der relativ dünnen Warenbahn führen könnten. Es treten lediglich die durch das Eigengewicht der Warenbahn induzierten Spannungen auf, welche aber gleichmäßig verteilt sind und keinen Schaden hervorrufen.

Durch die laminaren Strömungsverhältnisse sowie durch das Einblasen vorgewärmter Frischluft und dadurch, daß die Warenbahn nicht direkt mit heißer Luft angeblasen wird, entsteht auf dem feuchten Harz der Warenbahn keine Haut, die zunächst ein Austreiben der Lösungsmittel aus dem Harz verhindern würde. Diese Haut würde nämlich das Lösungsmittel einschließen, was später, wenn das Lösungsmittel in den dampfförmigen Zustand übergeht, zu einem Aufreißen der Oberfläche führen würde, wodurch die sogen. Nadellöcher entstehen. Außerdem würde das eingeschlossene Lösungsmittel als "Bremse" wirken. Diese Erscheinungen werden erfindungsgemäß ausgeschlossen.

Insgesamt werden durch die Erfindung optimale Verhältnisse dadurch geschaffen, daß eine relativ große Durchsatzleistung bei geringer Höhe der Behandlungskammer, günstigen Abluftverhältnissen und einer verbesserten Produktqualität erzielt wird. Dieses optimale Ergebnis könnte sich teilweise dadurch begründen, daß infolge des Zusammenwirkens der Strahlungswärme und der relativ hoch vorgewärmten Frischluft in Abkehr von der bisherigen Verfahrensführung einerseits ein schnelles Erwärmen der Materialbahn erfolgt und andererseits ein Trocknen von innen nach außen ohne die genannte Hautbildung und ohne das Entstehen der sogen. Nadellöcher im Endprodukt. Außerdem wäre noch zu erwähnen, daß durch das erfindungsgemäße Verfahren die Gelzeit des verwendeten Kunstharzes verkürzt werden kann.

Vorzugsweise hat die vorgewärmte Frischluft eine Temperatur, die im Bereich der Temperatur der Strahlungswärme liegt. Dies bedeutet, daß die Warenbahn nicht, wie bisher, langsam erwärmt wird. Es hat sich gezeigt, daß die relativ schnelle Erwärmung der Warenbahn im Zusammenhang mit den anderen Lösungsmerkmalen die genannte Oberflächenhautbildung verhindert.

Beispielsweise kann die Temperatur der Frischluft im Bereich von 140°C bis 180°C und insbesondere bei 160°C, und die Temperatur der Strahlungswärme im Bereich von 160°C bis 200°C und insbesondere bei 180°C liegen.

Im Gegensatz zum Stand der Technik wird mit viel geringeren Luftgeschwindigkeiten gearbeitet. Die Strömungsgeschwindigkeit der Frischluft beträgt zwischen 1 bis 3 m/sec. im Gegensatz zu 10 bis 30 m/sec. beim Stand der Technik. Dabei wird die Frischluft in einer solchen Menge eingeblasen, daß in bezug auf die Explosionsgrenze eine 3- bis 4-fache Sicherheit gegeben ist.

Beispielsweise dadurch, daß ca. 5 % mehr Luft in die Behandlungskammer eingeführt als abgeführt wird, wird in der Behandlungskammer gegenüber der Umgebung ein geringer Überdruck eingestellt. Dieser Überdruck hat zur Folge, daß keine kalte Falschluft an unvermeidlichen Leckstellen wie an der Eintritts- und Austrittsstelle der Warenbahn in die Behandlungskammer gelangen kann. Dies führt zu einer Vergleichmäßigung des Trocknungs- und Polymerisationsvorganges.

Für den Fall, daß die Warenbahn von unten nach oben durch eine Behandlungskammer und nach einer Umlenkung von oben nach unten durch eine weitere Behandlungskammer bewegt wird, erfolgt bevorzugt vor der Umlenkung eine Kühlung der Warenbahn innerhalb einer Kühlzone. Dieses Kühlen kann mit Umgebungsluft vorgenommen werden. Obwohl dadurch ein Teil der Heizstrecke für den Trocknungsvorgang in Anspruch genommen wird, ermöglicht dieses Kühlen überraschenderweise eine höhere Durchsatzgeschwindigkeit der Warenbahn und führt zu einer besseren Produktqualität. Außerdem ergibt sich dadurch eine bessere Ausnützung der Behandlung in der genannten weiteren Behandlungskammer, in der sich die Warenbahn von oben nach unten bewegt. Ferner läßt sich hierdurch die Bauhöhe der Anlage verringern, weil die Umlenkung früher erfolgt und dadurch der von oben nach unten gerichtete Bewegungsabschnitt intensiver genutzt werden kann.

Entsprechend einer weiteren Ausgestaltung der Erfindung wird die Strahlungswärme in bezug auf die Breite der Warenbahn hinsichtlich Wärmemenge und/oder Temperatur unterschiedlich eingestellt. Dadurch können eventuelle Ungleichmäßigkeiten in der Erwärmung und Trocknung der Warenbahn, z. B. aufgrund von ungleichmäßiger Luftverteilung über die Breite der Bahn oder Wärmeverlusten, kompensiert werden, so daß die Gel-Zeiten bzw. das Fließverhalten der Warenbahn über deren Breite noch gleichmäßiger werden. Eventuell können auch noch Bedingungen, die bei der Weiterverarbeitung der Warenbahn auftreten, durch diese Maßnahme Berücksichtigung finden.

Schließlich besteht die Möglichkeit, bei großem Luftbedarf die Frischluft an mindestens zwei verschiedenen Stellen in die Behandlungskammer einzuleiten, beispielsweise dort, wo die Warenbahn in die Behandlungskammer eintritt und in einem Zwischenbereich. Dies hat zur Folge, daß an den entsprechenden Stellen geringere Luftmengen eingeführt werden müssen und somit das Erfordernis der laminaren Strömung erfüllt werden kann.

Die Erfindung löst die genannte Aufgabe weiterhin durch eine Anlage gemäß dem Oberbegriff von Anspruch 9, welche dadurch gekennzeichnet ist, daß als Einrichtung zum Aufbringen von Strahlungswärme auf die durch die Behandlungskammer bewegte Warenbahn mindestens ein einseitig an den Strahlungsheizkörper vorgesehen ist.

Der Strahlungsheizkörper umfaßt vorzugsweise mindestens eine heizmitteldurchströmte Leitung, die serpentinenförmig an gegenüberliegenden Wänden der Behandlungskammer angeordnet ist. Insbesondere ist diese Leitung zur Warenbahn hin von einer Abstrahlplatte abgedeckt, mit der Folge, daß die Leitungen nicht in das Innere der Behandlungskammer ragen. Dadurch werden störende Turbulenzen in der Luftbewegung verhindert. Außerdem bewirkt die abdeckende Abstrahlplatte eine günstige Wärmeanstrahlung der Warenbahn.

Im Zusammenhang mit dieser Lösung kann die Leitung in die Wände der Behandlungskammer eingebettet sein.

Für eine differenzierte Wärmestrahlung in Bewegungsrichtung der Warenbahn oder quer dazu kann entweder die Steigung der serpentinenförmig verlaufenden Leitung in Bewegungsrichtung der Warenbahn unterschiedlich sein oder es können in Bewegungsrichtung der Warenbahn oder quer dazu mehrere, getrennt und unterschiedlich gespeiste Leitungen angeordnet sein. Wie bereits erwähnt, wird mit dieser Maßnahme erreicht, daß die Warenbahn über die Breite ein sehr gleichmäßiges Fließverhalten bzw. sehr konstante Gel-Zeiten zeigt. Ferner kann mit dieser Einrichtung während des Betriebs der Anlage der Harzfluß der Warenbahn links, Mitte oder rechts beeinflußt werden, um Bedingungen in der Weiterverarbeitung gerecht zu werden.

Entsprechend einer weiteren, sehr wesentlichen Ausgestaltung der Erfindung ist die Behandlungskammer in einem mit Warmluft gefüllten, abgedichteten Isolierraum untergebracht. Wenn in der Behandlungskammer eine Temperatur von ca. 180°C herrscht, so beträgt die Temperatur der Luft in diesem Isolierraum ca. 90°C. Diese Art der Unterbringung in Form eines "Ofens-im-Ofen" hat verschiedene Vorteile. Ein Vorteil ist eine weitere Vergleichmäßigung und Stabilisierung der Temperaturverhältnisse innerhalb der Behandlungskammer. Außerdem besteht die Möglichkeit, aus der Behandlungskammer ausleckende, verunreinigte Luft zu sammeln und gezielt einer Reinigungsvorrichtung zuzuführen. Dies dient umweltfreundlichen Betriebsverhältnissen im Zusammenhang damit, daß eine relativ geringe Menge an zu reinigender Abluft anfällt.

Die Erfindung wird nun in der nachfolgenden Beschreibung anhand der in den Zeichnungen rein schematisch dargestellten Ausführungsbeispiele näher erläutert.

Es zeigt:

Fig. 1 eine schematische Längsschnittansicht durch eine Anlage zum Trocknen einer mit härtbarem Kunstharz imprägnierten Warenbahn;

Fig. 2 eine Teilschnittansicht durch die heizmitteldurchströmte Leitung mit einer diese abdeckenden Abstrahlplatte;

Fig. 3 eine Teilansicht einer serpentinenförmig verlegten, heizmitteldurchströmten Leitung;

Fig. 4 eine gegenüber der Fig. 3 abgeänderte Ausführungsform der heizmitteldurchströmten Leitung;

Fig. 5 eine schematische Querschnittsansicht durch eine Trocknungsanlage.

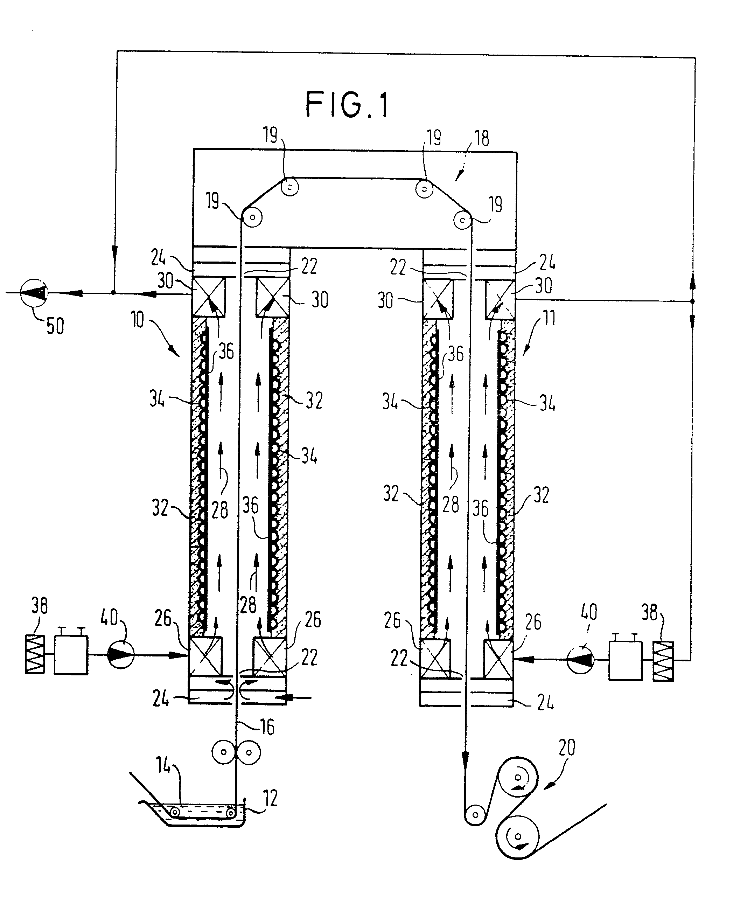

Die Anlage gemäß Fig. 1 besteht aus zwei Behandlungskammern 10 und 11. Der Behandlungskammer 10 ist ein Imprägnierungsbad 12 vorgeschaltet, in dem sich ein Kunstharz 14 befindet. Eine Warenbahn 16 durchläuft dieses Imprägnierungsbad, anschließend die Behandlungskammer 10 von unten nach oben, dann eine Umlenkeinrichtung 18 mit Umlenkwalzen 19 und hierauf die Behandlungskammer 11 von oben nach unten. Hinter dieser Behandlungskammer 11 wird die Warenbahn über ein Walzensystem 20 abgezogen und der weiteren Behandlung zugeführt.

Bis auf die Durchtrittsstellen 22 für die Warenbahn 16 an den Enden der Behandlungskammern ist die Behandlungskammer weitgehend abgedichtet. Im Bereich dieser Durchtrittsstellen 22 befindet sich jeweils eine Schleuse 24, an der mittels eines Luftstromes ein abdichtender Luftvorhang gebildet wird, der ein Austreten von Luft aus der Behandlungskammer in die Umgebung weitgehend verhindert. Im Bereich der unteren Durchtrittsstellen 22 der Behandlungskammern befinden sich beidseits der Warenbahn Lufteinleitkästen 26, durch die vorgewärmte Luft parallel zur Warenbahn 16 von unten nach oben eingeleitet wird. Entsprechend den Pfeilen 28 durchströmt diese Luft die Behandlungskammer in laminarer Strömung von unten nach oben bis zu oberen Luftaustrittskästen 30.

In den gegenüberliegenden Seitenwänden 32 der Behandlungskammern 10 und 11 ist eine serpentinenförmig verlegte, heizmitteldurchströmte Leitung 34 eingebettet. Die dicht gestaffelten Windungen der Leitung sind auf der Warenbahnseite durch eine Abstrahlplatte 36 abgedeckt. Durch das in dieser Leitung 34 strömende Öl erwärmt sich die Abstrahlplatte 36 gleichmäßig und richtet Strahlungswärme in Richtung der durch die Behandlungskammer bewegten Warenbahn 16.

Die durch die Lufteinleitkästen 26 eingeblasene Frischluft wird in einem Wärmetauscher 38 vorgewärmt und dann mittels eines Gebläses 40 in die Behandlungskammer auf die genannte Weise eingeblasen.

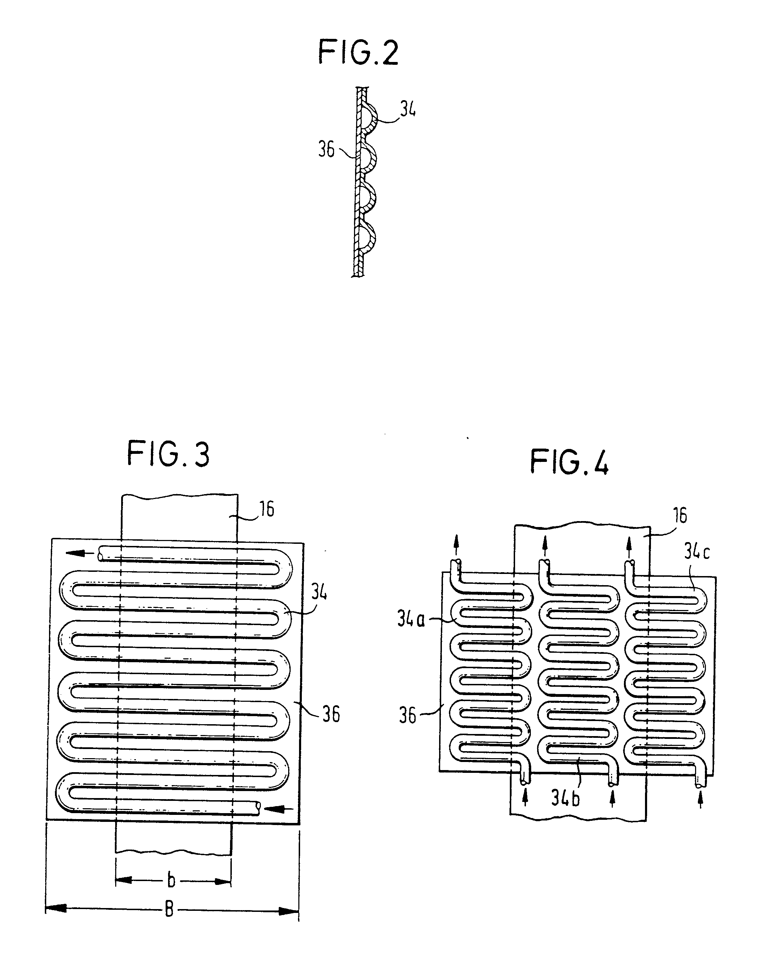

Aus Fig. 2 ergibt sich in einer Detailansicht der Aufbau der öldurchströmten Leitung 34 zusammen mit der Abstrahlplatte 36. Die Abstrahlplatte 36 bildet eine glatte Begrenzungswand der Behandlungskammer, welche in der Luftbewegung keine Turbulenzen erzeugt.

Fig. 3 zeigt schematisch die serpentinenförmige Ausbildung der Leitung 34 im Zusammenhang mit der Abstrahlplatte 36 im Verhältnis zur Warenbahn 16. Dabei ist festzustellen, daß für die Schaffung stabiler Temperaturverhältnisse die Breite b der Warenbahn wesentlich kleiner ist als die Breite B der Abstrahlplatte 36.

Eine andere Ausführungsvariante zeigt Fig. 4. Dort sind in Breitenrichtung der Warenbahn drei parallel angeordnete, serpentinenförmig verlegte Leitungen 34a, 34b und 34c dargestellt. Diese verschiedenen Leitungen sind getrennt voneinander durchströmt, so daß die Wärmeabstrahlverhältnisse über die Breite der Warenbahn unterschiedlich gestaltet werden können. Bei dem dargestellten Beispiel können beispielsweise die Ränder der Warenbahn durch die Leitungen 34a und 34c anders beeinflußt und getrocknet werden als der Mittelbereich der Warenbahn 16 durch die Leitung 34b.

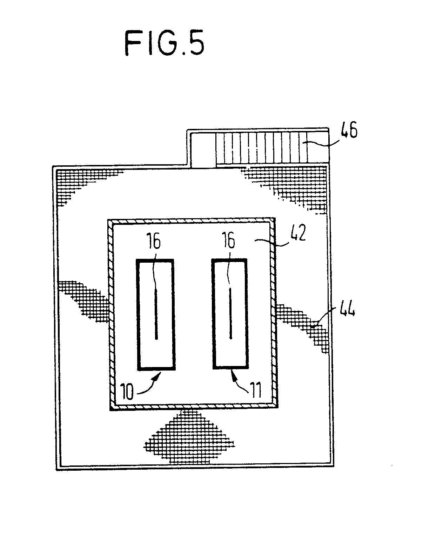

Fig. 5 zeigt im Querschnitt die Gesamtanlage mit den beiden Behandlungskammern 10 und 11, durch die sich die Warenbahn 16 bewegt. Entsprechend dem bereits erwähnten "Ofen-im-Ofen"-Prinzip befinden sich die Behandlungskammern 10 und 11 in einem Isolierraum 42, in dem sich erwärmte Luft von beispielsweise 90°C befindet. Um diese turmförmige Anordnung ist ein Podest 44 angeordnet, welches über eine Treppe 46 zugänglich ist.

Aus Fig. 1 ergibt sich schließlich die Luftführung im einzelnen. Danach wird die Abluft aus der Behandlungskammer 10 über einen Abluftventilator 50 einer Abluftreinigungsanlage zugeleitet. Von der Abluft der Behandlungskammer 11 kann hingegen ein wesentlicher Teil dem Wärmetauscher 38 im Umluftbetrieb wieder zugeführt werden, während der andere Teil über den Abluftventilator 50 dem Reinigungsprozeß zugeleitet wird.

Obwohl es in den Figuren nicht gezeigt ist, kann die Abstrahlplatte statt mittels öldurchströmter Leitungen selbstverständlich in jeder anderen Art, z. B. elektrisch, beheizt werden.

## Patentansprüche

1. Verfahren zur Herstellung von Prepregs durch Wärmebehandlung einer mit einem härtbaren Kunstharz imprägnierten Warenbahn, bei dem die Warenbahn durch mindestens eine Behandlungskammer bewegt wird, innerhalb der Wärme auf die Warenbahn aufgebracht und in die Luft eingeführt wird, um die bei der Wärmebehandlung entstehenden gasförmigen Stoffe zu verdünnen und zumindest teilweise abzuführen, wobei die Wärme in Form von Strahlungswärme auf die Warenbahn aufgebracht wird und die Luft als vorgewärmte Frischluft gesteuert in die Behandlungskammer eingeleitet wird, *dadurch gekennzeichnet*, dass die Luft in möglichst laminarer Strömung im wesentlichen parallel zur Warenbahn an dieser entlang geführt wird.

2. Verfahren nach Anspruch 1, *dadurch gekennzeichnet*, daß die vorgewärmte Frischluft eine Temperatur hat, die im Bereich der Temperatur der Strahlungswärme liegt.

3. Verfahren nach Anspruch 2, *dadurch gekennzeichnet*, daß die Temperatur der Frischluft im Bereich von 140°C bis 180°C und insbesondere bei 160°C, und die Temperatur der Strahlungswärme im Bereich von 160°C bis 200°C und insbesondere bei 180°C liegt.

4. Verfahren nach einem der Ansprüche 1 bis 3, *dadurch gekennzeichnet*, daß die Strömungsgeschwindigkeit der Frischluft 1 bis 3 m/sec. beträgt.

5. Verfahren nach einem der Ansprüche 1 bis 4, *dadurch gekennzeichnet*, daß in der Behandlungskammer gegenüber der Umgebung derselben ein geringer Überdruck herrscht.

6. Verfahren nach einem der Ansprüche 1 bis 5, *dadurch gekennzeichnet*, daß für den Fall, daß die Warenbahn von unten nach oben durch eine Behandlungskammer und nach einer anschließenden Umlenkung von oben nach unten durch eine weitere Behandlungskammer bewegt wird, die Warenbahn vor der Umlenkung durch eine Kühlzone geführt wird.

7. Verfahren nach einem der Ansprüche 1 bis 6, *dadurch gekennzeichnet*, daß die Strahlungswärme in bezug auf die Breite der Warenbahn hinsichtlich Wärmemenge und/oder Temperatur unterschiedlich eingestellt wird.

8. Verfahren nach einem der Ansprüche 1 bis 7, *dadurch gekennzeichnet*, daß bei großem Luftbedarf die Frischluft an mindestens zwei in Richtung der vertikal nach oben oder nach unten führenden Bewegungsbahn im Abstand liegenden Stellen in die Behandlungskammer eingeleitet wird.

9. Anlage zur Herstellung von Prepregs durch Wärmebehandlung einer mit einem härtbaren Kunstharz imprägnierten Warenbahn, mit mindestens einer Behandlungskammer, einer Einrichtung zum Aufbringen von Strahlungswärme auf die Warenbahn und einer Einrichtung zum Abführen der mit Luft verdünnten, bei der Wärmebehandlung entstehenden gasförmigen Stoffe aus der Behandlungskammer, wobei an mindestens einer Stelle der Behandlungskammer (10, 11) eine Frischlufteintrittseinrichtung (26) angeordnet ist, die mit einer steuerbaren Frischluftbeschickungseinrichtung (40) und einer Heizeinrichtung (38) in Verbindung steht, *dadurch gekennzeich-*

*net*, dass als Einrichtung zum Aufbringen von Strahlungswärme auf die durch die Behandlungskammer (10, 11) bewegte Warenbahn (16) mindestens ein einseitig an den Strömungsweg der Luft angrenzender Strahlungsheizkörper (34, 36) vorgesehen ist.

10. Anlage nach Anspruch 9, *dadurch gekennzeichnet*, daß der Strahlungsheizkörper mindestens eine heizmitteldurchströmte Leitung (34) umfaßt, die serpentinenförmig an gegenüberliegenden Wänden (32) der Behandlungskammer (10, 11) angeordnet ist.

11. Anlage nach Anspruch 10, *dadurch gekennzeichnet*, daß die Leitung (34) zur Warenbahn (16) hin von einer Abstrahlplatte (36) abgedeckt ist.

12. Anlage nach Anspruch 10 oder 11, *dadurch gekennzeichnet*, daß die Leitung (34) in die Wände (32) der Behandlungskammer (10, 11) eingebettet ist.

13. Anlage nach einem der Ansprüche 10 bis 12, *dadurch gekennzeichnet*, daß die Steigung der serpentinenförmig verlaufenden Leitung (34) in Bewegungsrichtung der Warenbahn (16) differenziert ist.

14. Anlage nach einem der Ansprüche 9 bis 12, *dadurch gekennzeichnet*, daß in Bewegungsrichtung der Warenbahn (16) mehrere, getrennt und unterschiedlich gespeiste Leitungen angeordnet sind.

15. Anlage nach einem der Ansprüche 9 bis 14, *dadurch gekennzeichnet*, daß quer zur Bewegungsrichtung der Warenbahn (16) mehrere, vorzugsweise drei getrennte und unterschiedlich gespeiste Leitungen (34a, 34b, 34c) angeordnet sind.

16. Anlage nach einem der Ansprüche 9 bis 15, *dadurch gekennzeichnet*, daß die Behandlungskammer (10, 11) in einem mit Warmluft gefüllten, abgedichteten Isolierraum (42) untergebracht ist.

**Revendications**

1. Procédé de fabrication de feuilles pré-imprégnées par traitement thermique d'une bande de feuille imprégnée d'une résine plastique durcissable, dans lequel la bande de feuille traverse au moins une chambre de traitement, à l'intérieur de laquelle de la chaleur est appliquée à la bande de feuille, et air est introduit pour diluer les matières gazeuses résultant du traitement thermique et au moins partiellement les éliminer, la chaleur étant appliquée à la bande de feuille sous forme d'une chaleur rayonnée et l'air étant introduit dans la chambre de traitement en étant dirigé sous forme d'air frais préchauffé, caractérisé en ce que l'air est amené dans un courant le plus laminaire possible sensiblement parallèle à la bande de feuille le long de celle-ci.

2. Procédé selon la revendication 1, caractérisé en ce que l'air frais préchauffé présente une température qui est située dans la zone de température de la chaleur rayonnée.

3. Procédé selon la revendication 2, caractérisé en ce que la température de l'air frais est située dans la zone de 140°C à 180°C et en particulier à 160°C, et en ce que la température de la chaleur rayonnée se trouve dans la zone de 160°C à 200°C et en particulier à 180°C.

4. Procédé selon l'une des revendications 1 à 3, caractérisé en ce que le débit du courant d'air frais est de 1 à 3 m/sec.

5. Procédé selon l'une des revendications 1 à 4, caractérisé en ce qu'il règne dans la chambre de traitement une légère surpression par rapport à l'environnement.

6. Procédé selon l'une des revendications 1 à 5, caractérisé en ce que, dans le cas où la bande de feuilles est dirigée de bas en haut à travers une chambre de traitement et après une inversion de sens est dirigée de haut en bas à travers une autre chambre de traitement, la bande de feuille est dirigée à travers une zone froide avant l'inversion de sens.

7. Procédé selon l'une des revendications 1 à 6, caractérisé en ce que la chaleur rayonnée est réglée différemment en se référant à la largeur de la bande de feuilles en ce qui concerne la quantité calorifique et/ou la température.

8. Procédé selon l'une des revendications 1 à 7, caractérisé en ce que en cas d'un besoin important en air, l'air frais est introduit dans la chambre de traitement au moins en deux emplacements situés à distance en direction de la piste de mouvement guidant vers le haut ou vers le bas.

9. Installation de fabrication de feuilles pré-imprégnées par traitement thermique d'une bande de feuilles imprégnée de matière plastique durcissable, comportant au moins une chambre de traitement, un dispositif d'application de chaleur rayonnée sur la bande de feuilles et un dispositif destiné à extraire hors de la chambre de traitement des matières gazeuses qui se forment lors du traitement thermique, diluées dans de l'air, au moins un emplacement de la chambre de traitement (10, 11) comportant un dispositif (26) d'entrée d'air frais, qui est en liaison avec un dispositif (40) d'alimentation d'air frais et un dispositif de chauffage (38), caractérisée en ce qu'il existe comme dispositif d'amenée de chaleur rayonnée sur la bande de feuilles (16) traversant la chambre de traitement (10, 16) au moins un corps chauffant rayonnant (34, 36) adjacent d'un côté au chemin du courant de l'air.

10. Installation selon la revendication 9, caractérisée en ce que le corps chauffant rayonnant comprend au moins une conduite (34) parcourue par un milieux chauffant, qui est disposée en serpentin sur des parois opposées (32) de la chambre de traitement (10, 11).

11. Installation selon la revendication 10, caractérisée en ce que la conduite (34) est recouverte en direction de la bande de feuille (16) par une plaque de rayonnement (36).

12. Installation selon la revendication 10 ou 11, caractérisée en ce que la conduite (34) est logée dans les parois (32) de la chambre de traitement (10, 11).

13. Installation selon l'une des revendications 10 à 12, caractérisée en ce que la pente de la conduite tracé en serpentin (34) est différenciée dans le sens de mouvement de la bande de feuille (16).

14. Installation selon l'une des revendications 9 à 12, caractérisée en ce que plusieurs conduites alimentées de façon séparée et différente sont disposées dans le sens de déplacement de la bande de feuille (16).

15. Installation selon l'une des revendications 9 à 14, caractérisée en ce que plusieurs conduites (34a, 34b, 34c) de préférence 3 alimentées de façon séparée et différente, sont disposées transversalement au sens de déplacement de la bande de feuille (16).

16. Installation selon l'une des revendications 9 à 15, caractérisée en ce que la chambre de traitement (10, 11) est placée dans un volume isolant (42) étanche, rempli d'air chaud.

**Claims**

1. A method for the manufacture of prepregs by the heat treatment of a product web impregnated with a hardenable synthetic resin, wherein the product web is moved through at least one treatment chamber wherein heat is applied to the product web and wherein air is introduced in order to dilute the gaseous substances formed during the heat treatment and to evacuate them at least partly, the heat being applied to the product web in the form of radiant heat and the air being introduced in a controlled manner into the treatment chamber as preheated fresh air, characterized in that the air is carried as far as possible in a laminar flow, substantially parallel to the product web along the latter.

2. A method according to claim 1, *characterized in that* the preheated fresh air has a temperature lying within the range of the temperature of the radiant heat.

3. A method according to claim 2, *characterized in that* the temperature of the fresh air lies in the range of 140°C to 180°C and in particular at 160°C, and the temperature of the radiant heat in the range of 160°C to 200°C and in particular at 180°C.

4. A method according to one of claims 1 to 3, *characterized in that* the rate of flow of the fresh amounts to 1 to 3 m/sec.

5. A method according to one of claims 1 to 4, *characterized in that* in the treatment chamber, there obtains a slight excess pressure, as compared with the ambient pressure.

6. A method according to one of claims 1 to 5, *characterized in that* in the case where the product web is carried from the bottom upwards through a treatment chamber, and after a subsequent deflection from the top downwards through a further treatment chamber, the product web is carried through a cooling zone before the deflection.

7. A method according to one of claims 1 to 6, *characterized in that* the radiant heat is set at different values with reference to the width of the product web as regards the amount of heat and/or the temperature.

8. A method according to one of claims 1 to 7, *characterised in that* in the case of large air requirements, the intake air is introduced into the treatment chamber at at least two points interspaced in the direction of the path of travel leading vertically upwards or downwards.

9. An installation for the manufacture of prepregs by the heat treatment of a product web impregnated with a hardenable synthetic resin, with at least one treatment chamber, an appliance for the application of radiant heat to the product web and an appliance for the evacuation of the gaseous substance which are formed during the heat treatment from the treatment chamber, an fresh air inlet (26) being arranged at at least one point of the treatment chamber (10, 11), which inlet is connected to a controllable fresh air feeder appliance (40) and a heating appliance (38), *characterized in that*, as appliance for the application of radiant heat to the product web (16) moving through the treatment chamber (10, 11), provision is made for at least one radiant heating unit (34, 36) adjacent to the flow path of the air at one side, thereof.

10. An installation according to claim 9, *characterized in that* the radiant heating unit comprises at least one line (34) traversed by a heating medium, which line is arranged in a zigzag configuration on opposed walls (32) of the treatment chamber (10, 11)

11. An installation according to claim 10, *charac-*

*terized in that* the line (34) is covered towards the product web (16) by a radiant plate (36).

12. An installation according to claim 10 or 11, *characterized in that* the line (34) is embedded in the walls (32) of the treatment chamber (10, 11).

13. An installation according to one of claims 10 to 12, *characterized in that* the slope of the line (34) with the zigzag configuration is differentiated in the direction of displacement of the product web (16).

14. An installation according to one of claims 9 to 12, *characterized in that* several lines separately and individually fed are arranged in the direction of movement of the product web (16).

15. An installation according to one of claims 9 to 14, *characterized in that* transversely to the direction of displacement of the product web (16), there are arranged several, preferably three, lines (34a, 34b, 34c) fed separately and discriminately.

16. An installation according to one of claims 9 to 15, characterized in that the treatment chamber (10, 11) is accommodated in a sealed insulated space (42) filled with heated air.

EP 0 157 403 B1

FIG.1

# FIG.2

# FIG.3

# FIG.4

## FIG.5